# EUROPEAN PATENT APPLICATION

(11) **EP 2 894 204 A1**
(43) Date of publication of application: **15.07.2015**
(21) Application number: 13834967.5
(22) Date of filing: 14.08.2013
(51) Int. Cl.: C09D 11/02, B41M 1/22, C03C 17/10, C04B 41/51, C04B 41/88

(54) **METAL INK COMPOSITION FOR DECORATING NON-POROUS SUBSTRATES**

(30) Priority: 04.09.2012 ES 201231372
(71) Applicant: Torrecid, S.A., 12110 Alcora (Castellón) (ES)
(72) Inventor: Ruiz Vega, Óscar, E-12006 Castellón de la Plana (ES); Sanz Garrido, Elena, E-12005 Castellón de la Plana (ES); Forés Fernandes, Alejandro, E-12560 Benicássim (Castellón) (ES)
(74) Representative: Carlos Hernando, Borja
(86) International application number: PCT/ES2013/070600
(87) International publication number: WO 2014/037597

(57) **Abstract**

The invention relates to a metal ink composition for decorating non-porous substrates by means of ink-jet printing on non-porous surfaces that are subjected to a heat treatment following printing, comprising at least one organic solvent as a vehicle that is a liquid at room temperature, and at least one ligand composition formed by an organometallic compound including ligands bound to the metal element and a resin used as a ligand agent. Said composition is prepared such that the physical properties of the metal ink such as boiling temperature, drying rate, spreading of the printed drop, flash point and conductivity are suitable for obtaining the required printing quality.

## Description

### Object of the invention

The present invention relates to an ink composition that provides metallic effects for decorating non-porous substrates by means of ink-jet technologies, in which the surfaces of said substrate are subjected to heat treatment after printing.

The heat treatment is necessary in order for the ink to adhere to the substrate and produce the final colour. The adhesion that is achieved with the heat treatment is such that the decoration made with the inks is permanent and resistant to abrasion, cleaning agents, weather factors, etc... With the purpose of achieving said adhesion, the heat treatment is carried out at temperatures above 300 °C, and preferably, at temperatures comprised between 650 °C and 850 °C.

The non-porous substrates are characterised by being stable to the heat treatment and, among them, there are materials such as glass, ceramic materials (wall tiles, floor tiles, etc.), glass-ceramic hobs, aluminium, steel and metal plates in general.

The present invention pertains to the ink industry for ink-jet printing non-porous substrates.

### Description of the state of the art

Currently, there are several printing processes and different inks to decorate non-porous surfaces in general. The present invention relates to a printing method for non-porous surfaces that uses inorganic inks obtained by dissolving organometallic compounds in water insoluble solvents.

Regarding the processes that use inorganic inks to decorate non-porous surfaces, these are subjected to a heat treatment once printed, with the purpose of combining them with the surface of the non-porous substrate and, in this way, giving the printed motif the required and desired permanence and unalterability against the most common agents and attacks.

It must be pointed out that, the denomination of the inks as inorganic, does not exclude organic compounds from being included in its composition, as they are generally used as solvents or vehicles for applying the ink and as such generally volatilise during the firing of the non-porous substrate.

In the state of the art prior to the present invention, inks with metallic effects for decorating non-porous surfaces are disclosed.

Firstly, there are inks in the state on the art that provide metallic effects with viscosities that are too high for their application onto substrates by means of the ink-jet technique.

Thus, the European patent EP 1104706A1 discloses an ink composition that may provide the gold metallic effect, with resin contents in the ink composition between 25 %-50 %. Likewise, Turpentine Oil is used in the composition as a solvent in order to mix with the metal precursors. The percentages of required resin, as well as the solvent used, provide a viscosity that is too high for the ink-jet application thereof.

Meanwhile, the American patent US 6355714 B1 discloses an ink for ceramic surfaces, in which the compositions described in the examples are aimed at obtaining pastes with a high viscosity (2,000 cP-10,000 cP), which cannot be applied by ink-jet printing.

Regarding these ink compositions, the difficulty and problem to solve is to obtain compositions that have a low viscosity (10 cP-20 cP), in order to ensure the correct operation of the printheads of the ink-jet printers, among other aspects.

Meanwhile, the international patent application WO 01/40392A1 discloses a composition based on the exclusive use of acrylic polymers such as resins that produce an inadequate aesthetic effect and, therefore, the desired metallic effect is not achieved with said compositions.

Likewise, the American patent application US 2011/0236646A1, only describes the gold compound, which is not sufficient to obtain a metallic layer with the required aesthetic effect (shine, colour, shade, etc.) and a high adhesion, and the solvent as a viscosity modifier, but it makes no reference to the use of resins or surfactants included in the metallic inks, for which reason it is impossible to deduce whether the printed ink drops will maintain their identity (not spread) in order to achieve the desired image quality. The temperature of the treatment is less than or equal to 200 °C, using the ink both for organic and inorganic supports.

The compositions described in the international patent application WO 01/40392A1 and the American patent application US 2011/0236646A1, have the inconvenience that, as the drop falls from the ink-jet printhead to the non-porous support, said drop does not maintain its identity (it spreads) and, therefore, the required definition and quality requirements are not achieved. For this reason, in the present invention an ink composition is used with an appropriate combination of solvents, resins and surfactants that guarantee a stable solution of the organometallic compound and does not produce defects when heat treated, providing a metallic layer with the required aesthetic effect (shine, colour, shade, etc.) and with high adhesion.

Lastly, document EP514073A2 discloses an ink composition based on water (5 %-85 %) as well as co-solvents that are soluble or partially soluble in water.

The presence of water in the composition provides inks with high conductivity that may lead to short-circuits in the ink-jet printhead, as indicated by printhead manufacturers such as Dimatix or Xaar, among others.

Moreover, all these inks have the inconvenience of the ink drying quickly due to the drying rate of the inks with known compositions being very high. The ink drying in the nozzles of the ink-jet printheads in a short period of time produces a layer that tends to block said printing nozzles, thus causing defects in printing.

Furthermore, it is necessary to develop inks whose compositions have an appropriate boiling point, in such a way that if the value is too low the ink evaporates quickly and the printed drops tend to contract, thus preventing specific lines or details from being printed since the definition is lost. Whereas, if the value is too high the ink evaporates too slowly and the printed drops expand, also causing the loss of image quality.

The object of the present invention is to provide an ink such that:
- whose composition results in viscosities and drying rates that enable its ink-jet printing;
- whose composition enables the ink to stay in the printing machine with the printing operation stopped for relatively long periods of time and without the heads becoming blocked;
- it meets the required quality and definition requirements, achieving that the printed drops maintain their identity and/or shape during application, thus avoiding the contraction or spreading thereof, for which they must have an appropriate boiling point; and
- the flash point thereof enables the correct operation of the ink-jet printers, without causing an ink flammability risk when it is being used;
- lastly, they have low conductivity that guarantees the absence of short-circuits in the printheads.

### Description of the invention

The present invention relates to a metallic ink composition for non-porous surfaces that includes organic solvent, organometallic compounds, ligands bound to the metallic element and resins that act as a ligand agent.

The organic solvent is composed by aliphatic hydrocarbons, aromatic hydrocarbons, terpenes and natural oils; or of a mixture thereof.

The organometallic compounds may be of the following metal elements: Au, Ag, Pd, Pt, Rh, Si, Bi, Ti, Co, Mn, Fe, Ti, Zr, Al, V, Ni, Cu, Ce, Sb, Cr, Ge, Sn, Pb, Mo, Zn and/or combinations thereof. Preferably, they may be of the following metallic elements: Au, Ag, Pd, Pt, Rh, Si, Bi, Ti, Co, Mn, Fe, Zr, Al, V, Ni, Cu, Cr, Sn, Zn and/or combinations thereof. More preferably, they may be of the following metallic elements: Au, Ag, Pd, Pt, Rh, Si, Bi, Ti, Ce, Co, Mn, Fe, V, Zn and/or combinations thereof.

The ligands bound to the metallic element may be from the following families: mercaptans, polycyclic mercaptans, alkoxides, sulphides, sulphur resinates, natural resinates, synthetic resinates, natural sulphur resinates, synthetic sulphur resinates, terpenes, sulphurised terpenes, terpenethiols, thiolates, linear thiols, cyclic thiols, mercaptopyridines, mercaptopyrimidines, mercaptoimidazols, carboxylates, phosphines, phenylphosphine, cyanates, mercaptocarboxylic acids, derivatives of polyalkylsulphide, amines and/or combinations thereof. Preferably, they may be from the following families: mercaptans, polycyclic mercaptans, alkoxides, sulphides, natural resinates, synthetic resinates, natural sulphur resinates, synthetic sulphur resinates, terpenes, sulphurised terpenes, terpenethiols, thiolates, linear thiols, cyclic thiols, mercaptopyridines, mercaptopyrimidines, carboxylates, phosphines, phenylphosphine, cyanates, derivatives of polyalkylsulphide, amines and/or combinations thereof. More preferably, they may be from the following families: mercaptans, polycyclic mercaptans, alkoxides, sulphides, natural resinates, synthetic resinates, natural sulphur resinates, synthetic sulphur resinates, terpenes, sulphurised terpenes, terpenethiols, thiolates, linear thiols, cyclic thiols and/or combinations thereof.

The resins used as a ligand agent may be dammar, sulphurised dammar, phenolics, alkylphenolics, alkyds, pyrrolidones, turpentine, rosin, balsams, oleoresins, lactoresins, sulphurised turpentine, sulphurised rosin, sulphurised balsams, sulphurised oleoresins, sulphurised lactoresins, maleates, sulphurised maleates, polyvinyls, sulphurised polyvinyls, polyamides, sulphurised polyamides, polyester, polyamines, polyurethanes, or a mixture thereof. Preferably, they may be dammar, sulphurised dammar, phenolics, alkylphenolics, alkyds, turpentine, rosin, balsams, oleoresins, sulphurised turpentine, sulphurised rosin, sulphurised balsams, sulphurised oleoresins or a mixture thereof.

The ink according to the invention is characterised in that it has a boiling temperature comprised between 80-110 °C, it has a drying rate lower than 2 % for 10 minutes and lower than 10 % for 1 hour (preferably less than 8% for 1 hour and comprised between 0.5 % and 1.5 % for 10 minutes), a spreading of the printed drop lower than 10 % after heat treatment, a flash point above 60 °C, and conductivity values lower than 2 µS/cm.

In order to calculate the drying rate, by means of an electric thermo-balance, a certain amount of ink placed in a beaker is weighed and maintained at 30 °C. Weighing is carried out at 10 and 60 minutes with the purpose of calculating the amount of solvent, that has evaporated during these periods of time. The result is expressed as % by weight of evaporated solvent at 10 minutes and at 60 minutes. In an ink according to the present invention, the drying rate is lower than 2 % for 10 minutes and lower than 10 % for 1 hour and, preferably, lower than 8 % for 1 hour and comprised between 0.5 % and 1.5 % for 10 minutes.

The spreading of the printed drop is measured by printing a design on a substrate that contains circles with known diameters. Once printed the variation in diameter of each circle is measured after the heat treatment of the piece. The variation in diameter of the printed circles relative to the circles with a known diameter on the substrate is expressed as a percentage.

In order to calculate the flash point, commercial equipment of the type STANHOPE-SETA, model FLASH SERIES 7- 70000, is used. In the ink, according to the present invention, the flash point should be above 60 °C.

Finally, in order to obtain the conductivity of the ink, commercial equipment is also used, such as a Conductivity meter of the Crison brand, model EC-Meter BASIC 30. In the ink, according to the present invention, the conductivity values should be below 2 µS/cm.

The ink characterised in this way has the additional advantage of enabling significant cost savings, firstly by improving the printing quality, uniformly maintaining said quality over time, and secondly, by avoiding that part of the ink is not used as a result of quick sedimentation and/or drying.

Likewise, and also according to the invention, the ink may comprise at least one antifoam agent and/or wetting or surfactant agent.

Preferably, the wetting or surfactant agent is a solution of polydimethylsiloxane with additions below 2.5 %.

Preferably, the antifoam agent is a solution of polymers and/or polysiloxane with additions below 2.5 %.

The ink, according to the invention, may comprise additional components typically selected from crosslinking agents, rheology control agents, anticorrosive agents, coalescing agents and biocides.

After printing, i.e. once the ink is applied onto the non-porous substrate or substrates, the surfaces of said substrate are subjected to heat treatment. The heat treatment is necessary for the ink to adhere to the substrate and produce the final colour. The adhesion that is achieved with the heat treatment is such that the decoration made with the inks is permanent and resistant to abrasion, cleaning agents, weather factors, etc... With the purpose of achieving said adhesion, the heat treatment is carried out at temperatures above 300 °C, preferably at temperatures of approximately 800 °C.

### Preferred embodiments

In order to complete the ongoing description, and with the purpose of aiding to a better understanding of the characteristics thereof, several exemplary embodiments of inks intended to provide designs with a metallic colour, according to the invention, accompany the present specification.

All the examples of embodiments are shown by way of illustrative and nonlimiting examples.

### Ink with gold effect:

Three compositions of ink with gold effect, according to the present invention, are shown in the table presented below, firstly showing the percentage of metal present in the organometallic compounds and followed by the percentage intervals by weight of the components used in each of the different compositions:

| **Component** | **Denomination** | % **Metal in the Organometallic** | **1** | **2** | **3** |
|---|---|---|---|---|---|
| Au-mercaptide | Gold Organometallic | 52 % | 13 %-29 % | | |
| Au-2-mercaptopyrimidine | Gold Organometallic | 63.9 % | | 10.5 %-23.5 % | |
| Au-terpenthiolate | Gold Organometallic | 24 % | | | 33 %-62.5 % |
| Ag-mercaptide | Silver Organometallic | 21 % | | 0 %-47.6 % | |
| Ag-sulphur resinate | Silver Organometallic | 24 % | 0 %-42 % | | 0 %-42 % |
| Rh-mercaptide | Rhodium Organometallic | 15 % | 0%-10% | | |
| Rh-octoate | Rhodium Organometallic | 13.2 % | | 0 %-11.4 % | 0%-1.4% |
| Si-mercaptide | Silicon Organometallic | 10 % | 0 %-15 % | 0 %-15 % | |
| Si-sulphur resinate | Silicon Organometallic | 10 % | | | 0 %-15 % |
| Bi-sulphur resinate | Bismuth Organometallic | 30 % | 0 %-5 % | 0 %-5 % | 0 %-5 % |
| Polysubstituted bicyclic aromatic hydrocarbon | Solvent | | 50 %-75 % | 50 %-75 % | 50 %-75 % |
| Terpene solvent | Solvent | | 50 %-75 % | 50 %-75 % | 50 %-75 % |
| Dammar resin | Ligand | | 0 %-25 % | 0 %-25 % | 0 %-25 % |
| Phenolic resin | Ligand | | 0 %-25 % | 0 %-25 % | 0 %-25 % |

With said compositions, the inks with gold effect, according to the invention, have the following physical properties:

| **Ink with gold effect** | **1** | **2** | **3** |
|---|---|---|---|
| Boiling temperature (°C) | 87 | 110 | 105 |
| Drying rate for 10 minutes (%) | 1.3 | 0.75 | 1 |
| Drying rate for 1 hour (%) | 7.5 | 6.0 | 6.5 |
| Spreading of the printed drop (%) | 7 | 8 | 7.5 |
| Flash point (°C) | >60 | >60 | >60 |
| Conductivity (µS/cm) | 1.8 | 1.7 | 1.5 |

According to the invention, the inks with gold effect that are characterised above may comprise at least the following agents whose interval of composition by weight is shown:

| **Component** | **Denomination** | **1** | **2** | **3** |
|---|---|---|---|---|
| Surfactant | Surfactant additive | 0 %-2.5 % | 0 %-2.5 % | 0 %-2.5 % |
| Antifoam | Antifoam additive | 0 %-2.5 % | 0 %-2.5 % | 0 %-2.5 % |

The preparation of the ink with gold effect incorporating the components shown is carried out by means of conventional methods generally used in the industry.

### Ink with silver effect:

Three compositions of ink with silver effect, according to the present invention, are shown in the table presented below, firstly showing the percentage of metal present in the organometallic compounds and followed by the percentage intervals by weight of the components used in each of the different compositions:

| **Component** | **Denomination** | **% Metal in the Organometallic** | **1** | **2** | **3** |
|---|---|---|---|---|---|
| Au-mercaptide | Gold Organometallic | 52 % | 0%-12 % | | 0%-12 % |
| Au-2- mercaptopyrimidine | Gold Organometallic | 63.9 % | | 0%-10 % | |
| Pt-sulphur resinate | Platinum Organometallic | 28 % | 0 %-14.5 % | 0 %-14.5 % | |
| Pt-mercaptide | Platinum Organometallic | 28 % | | | 0%-14.5 % |
| Pd-sulphur resinate | Palladium Organometallic | 24 % | 0 %-17 % | | |
| Pd-mercaptide | Palladium Organometallic | 24 % | | 0 %-17 % | |
| Pd-neodecanoate | Palladium Organometallic | 14 % | | | 0 %-29 % |
| Rh-mercaptide | Rhodium Organometallic | 15 % | 0%-10 % | 0%-10 % | 0 %-10 % |
| Si-mercaptide | Silicon Organometallic | 10 % | 0 %-15 % | | 0 %-15 % |
| Si-sulphur resinate | Silicon Organometallic | 10 % | | 0 %-15 % | |
| Bi-sulphur resinate | Bismuth Organometallic | 30 % | 0 %-5 % | 0 %-5 % | 0 %-5 % |
| Polysubstituted bicyclic aromatic hydrocarbon | Solvent | | 50 %-75 % | 50 %-75 % | 50 %-75 % |
| Terpene solvent | Solvent | | 50 %-75 % | 50 %-75 % | 50 %-75 % |
| Dammar resin | Ligand | Ligand | | 0 %-25 % | |
| Phenolic resin | Ligand | | 0 %-25 % | 0 %-25 % | 0 %-25 % |

With said compositions, the inks with silver effect, according to the invention, have the following physical properties:

| **Ink with silver effect** | **1** | **2** | **3** |
|---|---|---|---|
| Boiling temperature (°C) | 89 | 97 | 94 |
| Drying rate for 10 minutes (%) | 1.15 | 0.60 | 0.9 |
| Drying rate for 1 hour (%) | 6.8 | 5.5 | 5.0 |
| Spreading of the printed drop (%) | 7.5 | 8.5 | 8.0 |
| Flash point (°C) | >60 | >60 | >60 |
| Conductivity (µS/cm) | 1.65 | 1.72 | 1.67 |

According to the invention, the inks with silver effect that are characterised above may comprise at least the following agents whose interval of composition by weight is shown:

| **Component** | **Denomination** | **1** | **2** | **3** |
|---|---|---|---|---|
| Surfactant | Surfactant additive | 0 %-2.5 % | 0 %-2.5 % | 0 %-2.5 % |
| Antifoam | Antifoam additive | 0 %-2.5 % | 0 %-2.5 % | 0 %-2.5 % |

The preparation of the ink with silver effect incorporating the components shown is carried out by means of conventional methods generally used in the industry.

### Ink with lustre effect:

Three compositions of ink with lustre effect, according to the present invention, are shown in the table presented below, firstly showing the percentage of metal present in the organometallic compounds and followed by the percentage intervals by weight of the components used in each of the different compositions:

| **Component** | **Denominati on** | **% Metal in the Organometallic** | **1** | **2** | **3** |
|---|---|---|---|---|---|
| Ti-butoxide | Titanium organometa llic | 14 % | 0 %-22 % | | 0 %-22 % |
| Ti-sulphur resinate | Titanium organometa llic | 14 % | | 0 %-22 % | |
| Zr-butoxide | Zirconium organometa llic | 24 % | 0 %-12.5 % | | |
| Polysubstituted bicyclic aromatic hydrocarbon | Solvent | | 50 %-75 % | 50 %-75 % | 50 %-75 % |
| Terpene solvent | Solvent | | 50 %-75 % | 50 %-75 % | 50 %-75 % |
| Dammar resin | Ligand | | 0 %-25 % | 0 %-25 % | |
| Alkyd resin | Ligand | | 0 %-25 % | | 0 %-25 % |

With said compositions, the inks with lustre effect, according to the invention, have the following physical properties:

| **Ink with lustre effect** | **1** | **2** | **3** |
|---|---|---|---|
| Boiling temperature (°C) | 85 | 93 | 88 |
| Drying rate for 10 minutes (%) | 1.3 | 0.75 | 1.05 |
| Drying rate for 1 hour (%) | 7.0 | 6.0 | 6.5 |
| Spreading of the printed drop (%) | 6.5 | 8.0 | 7.5 |
| Flash point (°C) | >60 | >60 | >60 |
| Conductivity (µS/cm) | 1.45 | 1.50 | 1.35 |

According to the invention, the inks with lustre effect that are characterised above may comprise at least the following agents whose interval of composition by weight is shown:

| **Component** | **Denomination** | **1** | **2** | **3** |
|---|---|---|---|---|
| Surfactant | Surfactant additive | 0 %-2.5 % | 0 %-2.5 % | 0 %-2.5 % |
| Antifoam | Antifoam additive | 0 %-2.5 % | 0 %-2.5 % | 0 %-2.5 % |

The preparation of the ink with lustre effect incorporating the components shown is carried out by means of conventional methods generally used in the industry.

## Claims

1. A metal ink composition for printing on non-porous surfaces of the type that are subjected to heat treatment following printing **characterised in that** the ink composition comprises:
a. at least one organic solvent as a vehicle that is liquid at room temperature;
b. at least one organometallic compound including ligands bound to the metallic element; and
c. at least one resin used as a ligand agent.

2. The ink composition, according to claim 1, **characterised in that** it has a boiling temperature comprised between 80 and 110 °C.

3. The ink composition, according to claim 1, **characterised in that** the drying rate is lower than 2 % for 10 minutes and lower than 10 % for 1 hour.

4. The ink composition, according to claim 3, **characterised in that** the drying rate is preferably 8 % for 1 hour and is comprised between 0.5 % and 1.5 % for 10 minutes.

5. The ink composition, according to claim 1, **characterised in that** the expansion of the printed drop is lower than 10 %.

6. The ink composition, according to claim 1, **characterised in that** the flash point is above 60 °C.

7. The ink composition, according to claim 1, **characterised in that** the conductivity is lower than 2 µS/cm.

8. The ink composition, according to claim 1, **characterised in that** the percentage by weight of the metal in the organometallic compound is comprised between 10 % and 63.90 % of the weight of said compound.

9. The ink composition, according to claim 1, wherein the organometallic compounds may be of the following metallic elements: Au, Ag, Pd, Pt, Rh, Si, Bi, Ti, Co, Mn, Fe, Ti, Zr, Al, V, Ni, Cu, Ce, Sb, Cr, Ge, Sn, Pb, Mo, Zn and/or combinations thereof.

10. The ink composition, according to claim 1, **characterised in that** the percentage by weight of the ligands bound to the metallic elements in the organometallic compound is comprised between 35 % and 90 % of the weight of said compound.

11. The ink composition, according to claim 1, wherein the ligands bound to the metallic element may be of the following families: mercaptates, polycyclic mercaptates, alkoxides, sulphides, sulphur resinates, natural resinates, synthetic resinates, natural sulphur resinates, synthetic sulphur resinates, terpenes, sulphurised terpenes, terpenethiols, thiolates, lineal thiols, cyclic thiols, mercaptopyridines, mercaptopyrimidines, mercaptoimidazole, carboxylates, phosphines, phenylphosphine, cyanates, mercaptocarboxylic acids, derivatives of polyalkylsulphide, amines and/or combinations thereof.

12. The ink composition, according to claim 1, **characterised in that** the percentage by weight of the organometallic compound is lower than 62.5 % of the total weight.

13. The ink composition, according to claim 1, **characterised in that** the percentage by weight of the organic solvent is comprised between 50 % and 75 % of the total weight.

14. The ink composition, according to claim 1, **characterised in that** the organic solvent is made up of aliphatic hydrocarbons, aromatic hydrocarbons, terpenes and natural oils; or a mixture thereof.

15. The ink composition, according to claim 1, **characterised in that** the percentage by weight of the resin is lower than 25 % of the total weight.

16. The ink composition, according to claim 1, **characterised in that** the resins may be dammar, sulphurised dammar, phenolics, alkylphenolics, alkyds, pyrrolidones, turpentine, rosin, balsams, oleoresins, lactoresins, sulphurised turpentine, sulphurised rosin, sulphurised balsams, sulphurised oleoresins, sulphurised lactoresins, maleates, sulphurised maleates, polyvinyls, sulphurised polyvinyls, polyamides, sulphurised polyamides, polyester, polyamines, polyurethanes or a mixture thereof.

17. The ink composition, according to claim 1, **characterised in that** it comprises at least one surfactant agent.

18. The ink composition, according to claim 17, **characterised in that** the percentage by weight of the surfactant agent is lower than 2.5 % of the total weight.

19. The ink composition, according to claim 17 or 18, **characterised in that** the ligand agent is constituted of polydimethylsiloxane solutions.

20. The ink composition, according to claim 1, **characterised in that** it comprises at least one antifoam agent.

21. The ink composition, according to claim 20, **characterised in that** the percentage by weight of the antifoam agent is lower than 2.5 % of the total weight.

22. The ink composition, according to claim 20 or 21, **characterised in that** the antifoam agent is constituted of polymers and/or polysiloxanes.

23. The ink composition, according to claim 1, **characterised in that** it comprises additional components selected among crosslinking agents, rheology control agents, anticorrosive agents, coalescing agents and biocides.
